**Europäisches Patentamt**

**European Patent Office**

**Office européen des brevets**

(19)

(11) Veröffentlichungsnummer : **0 373 409 B1**

(12)

# EUROPÄISCHE PATENTSCHRIFT

(45) Veröffentlichungstag der Patentschrift :
**29.04.92 Patentblatt 92/18**

(51) Int. Cl.$^5$ : **B29B 7/74, B29B 7/76**

(21) Anmeldenummer : **89121822.4**

(22) Anmeldetag : **25.11.89**

(54) **Verfahren und Vorrichtung zum Herstellen von Kunststoffen, insbesondere Schaumstoffen, aus mindestens zwei fliessfähigen, dosiert zugeführten Reaktionskomponenten.**

(30) Priorität : **10.12.88 DE 3841671**

(43) Veröffentlichungstag der Anmeldung :
**20.06.90 Patentblatt 90/25**

(45) Bekanntmachung des Hinweises auf die
Patenterteilung :
**29.04.92 Patentblatt 92/18**

(84) Benannte Vertragsstaaten :
**DE FR GB IT**

(56) Entgegenhaltungen :
**DE-A- 3 507 202
DE-B- 1 153 153
FR-E- 71 522
GB-A- 811 695**

(73) Patentinhaber : **MASCHINENFABRIK
HENNECKE GMBH
Postfach 1180
W-5205 St. Augustin 1 (DE)**

(72) Erfinder : **Sulzbach, Hans-Michael, Dipl.-Ing.
Hermann-Löns-Strasse 12
W-5330 Königswinter 21 (DE)**

(74) Vertreter : **Müller, Heinz-Gerd, Dipl.-Ing. et al
BAYER AG Konzernverwaltung RP
Patentabteilung
W-5090 Leverkusen 1, Bayerwerk (DE)**

EP 0 373 409 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum Herstellen von Kunststoffen, insbesondere Schaumstoffen, aus mindestens zwei fließfähigen, dosiert zugeführten Reaktionskomponenten, wobei mindestens eine der Reaktionskomponenten mit pulvrigem bis feinkörnigem oder faserigem Zusatzstoff in vorgegebenem Verhältnis im Durchlauf unter Druck in einer Vormischzone vorvermischt und danach mit der anderen Reaktionskomponente zusammengeführt, im Durchlauf vermischt und das Gemisch ausreagieren gelassen wird.

Um besondere Eigenschaften des Endproduktes zu erzielen, müssen immer häufiger den Ausgangskomponenten pulvrige bis feinkörnige oder faserige Zusatzstoffe beigemischt werden. Kurzglasfasern erhöhen beispielsweise die Festigkeitseigenschaften, minderwertige Füllstoffe dienen der Verbilligung des Produktes, pulverisierte Schaumstoffabfälle lassen sich wiederverwerten und die Zugabe von Melaminharzen erhöht die Flammwidrigkeit.

Es bereitet Schwierigkeiten, Reaktionskomponenten und Zusatzstoffe beim Durchlaufvermischen in zeitlich konstant bleibendem Verhältnis zu dosieren. Dies ist dadurch bedingt, daß pulvriges bis feinkörniges oder faseriges Gut große Schwankungen in der Schüttdichte aufweist. Beim Fördern kann es leicht zu Verstopfungen kommen, so daß die Forderung unregelmäßig und die Dosierung ungenau wird.

Es wurde schon versucht, pulverisierte Abfallschaumstoffe (DE-PS 25 40 934 entsprechend US-PS 4 068 831) bei der Herstellung von Polyurethan-Schaumstoffen der Polyolkomponente nahezu drucklos in einem Vormischer zuzudosieren, indem man an der Aufgabestelle einen Mantel aus der Reaktionskomponente bildete, der den zugeführten Zusatzstoff hinderte, sich durch elektrostatische Aufladungen an der Wandung abzusetzen. Auf eine exakte Dosierung kam es hierbei nicht so sehr an, und die allgemeinen Förderschwierigkeiten für pulverförmige Güter waren auch mit dieser Vorrichtung nicht zu beheben.

Es besteht die Aufgabe, ein Verfahren und eine Vorrichtung zu schaffen, womit nicht nur das Dosierverhältnis der Reaktionskomponenten, sondern auch dasjenige des Zusatzstoffes bei kontinuierlichem Arbeiten exakt eingehalten werden.

Gelöst wird diese Aufgabe dadurch, daß der Zusatzstoff beim Zuführen verdichtet, der Druck in der Vormischzone konstant gehalten und das Gemisch aus Reaktionskomponente und Zusatzstoff der anderen Reaktionskomponente zum Vermischen dosiert zugefördert werden.

Überraschenderweise hat sich gezeigt, daß der Druck im Vormischer und der Verdichtungsgrad ursächlich zusammenhängen. Steigt der Druck über einen spezifischen Sollwert an, so ist dies ein Zeichen für einen zu hohen Verdichtungsgrad und damit für eine Überdosierung des zugeführten Zusatzstoffes. Fällt der Druck unter den Sollwert, so ist der Verdichtungsgrad zu niedrig, so daß dementsprechend unterdosiert wird. Hält man den Druck konstant, dann wird eine zeitlich gleichbleibende Gewichtsmenge an Zusatzstoff in die Vormischzone eindosiert. Die zeitlich gleichbleibende Dosierung der fließfähigen Reaktionskomponenten, insbesondere über Kolbendosierpumpen, ist lange Stand der Technik und bereitet keinerlei Schwierigkeiten. Um das neue Verfahren für die Erzeugung unterschiedlicher Endprodukte einsetzen zu können, versteht es sich, daß die Dosierverhältnisse frei wählbar sein müssen. Es hat sich gezeigt, daß in den meisten Fällen ein Druck im Vormischer von etwa 0,5 bis 3 bar eine exakte Dosierung erlaubt. Beispielsweise bei der Zugabe von Melamin als Zusatzstoff hat sich ein Druck zwischen 0,8 bis 1 bar bewährt.

Gemäß einer ersten Durchführungsform des neuen Verfahrens ist der Verdichtungsgrad des Zusatzstoffes einstellbar bzw. regelbar.

Dadurch ergibt sich nämlich ein konstanter Druck im Vormischer, welcher seinerseits ein Charakteristikum für die exakte Gewichtsdosierung des Zusatzstoffes darstellt.

Gemäß einer zweiten Durchführungsform des neuen Verfahrens verwendet man als Regelgröße für den Verdichtungsgrad den Druck in der Vormischzone.

In diesem Falle mißt man den Druck in der Vormischzone, vergleicht ihn mit einem Sollwert und regelt den Verdichtungsgrad nach, bis sich der Solldruck wieder eingestellt hat.

Die neue Vorrichtung zum Herstellen von Kunststoffen, insbesondere Schaumstoffen, aus mindestens zwei fließfähigen, dosiert zugeführten Reaktionskomponenten geht aus von Vorratsbehältern für Reaktionskomponenten, von denen Zuleitungen über Dosierpumpen zu einem Mischkopf führen, und von einer Speiseschnecke zum Einbringen von pulvrigem bis feinkörnigem Zusatzstoff, welche in einen in mindestens einer der Zuleitungen zwischen Dosierpumpe und Mischkopf angeordneten Vormischer mündet.

Gemäß einer ersten Ausführungsform ist das Neue darin zu sehen, daß die Speiseschnecke als Verdichtungsschnecke ausgebildet ist; daß das Drehmoment ihres Antriebes einstellbar bzw. regelbar ist und daß in der Zuleitung zwischen Vormischer und Mischkopf eine weitere Dosierförderpumpe angeordnet ist.

Einem bestimmten Druck entspricht ein bestimmter Verdichtungsgrad des Zusatzstoffes durch die Verdichtungsschnecke. Dieser Verdichtungsgrad wiederum ist über das Drehmoment des Antriebes der Verdichtungsschnecke einstell- bzw. regelbar. Die zusätzliche Dosierpumpe zum Fördern des Gemisches aus der Reaktionskomponente und dem Zusatzstoff gewährleistet, daß der im Vormischer herrschende Druck von jenem in der Mischkammer völlig unabhängig bleibt.

Gemäß einer zweiten Ausführungsform ist das Neue darin zu sehen, daß die Speiseschnecke als Verdichtungsschnecke ausgebildet ist; daß am Vormischer ein Drucksensor angeordnet ist, welcher mittels einer Signalleitung über einen Sollwertvergleicher und Drehzahlregler mit dem Antrieb der Verdichtungsschnecke verbunden ist und daß in der Zuleitung zwischen Vormischer und Mischkopf eine weitere Dosierpumpe angeordnet ist.

Der Drucksensor mißt dauernd den im Vormischer herrschenden Druck. Dieser wird im Sollwertvergleicher mit dem dort gespeicherten, produktspezifischen Sollwert verglichen und bei Abweichungen davon wird über den Drehzahlregler der drehzahlregelbare Antrieb der Verdichtungsschnecke im Sinne höherer oder kleinerer Drehzahl und damit im Sinne größerer oder kleinerer Verdichtung geändert, um wieder den normalen Verdichtungsgrad einzustellen. Durch die weitere Dosierpumpe wird erreicht, daß der im Vormischer herrschende Druck von jenem in der Mischkammer des Mischkopfes völlig unabhängig bleibt.

Soll man mit der neuen Vorrichtung verschiedene Endprodukte herstellen können, versteht es sich, daß die Antriebe der Dosierpumpen drehzahlveränderbar sein müssen, damit man die Gesamtausstoßmenge bzw. Mischungsverhältnisse entsprechend wählen kann.

Vorzugsweise ist zwischen Verdichtungsschnecke und Vormischer ein Absperrorgan angeordnet.

Auf diese Weise ist es möglich abzuwarten, bis sich beim Anfahren im Vormischer ein Druck und in der Verdichtungsschnecke ein Verdichtungsgrad aufgebaut haben, um erst dann die Vermischung zuzulassen.

Es ist auch von besonderem Vorteil für die Anfahrphase, der weiteren Dosierpumpe, d.h. jener, welche zwischen Vormischer und Mischkopf angeordnet ist, eine By-Pass-Leitung mit Absperrorgan zuzuordnen.

Man fördert so lange über den By-Pass, bis sich der Druck im Vormischer aufgebaut hat und bis Gemisch aus Zusatzstoff und Reaktionskomponente vorhanden ist.

In der Zeichnung ist die neue Vorrichtung in zwei Ausführungsbeispielen für die Herstellung von Polyurethan-Schaumstoff aus Polyol und Isocyanat rein schematisch dargestellt und nachstehend näher beschrieben. Es zeigen:

Fig. 1 die Vorrichtun gemäß erstem Ausführungsbeispiel und

Fig. 2 die Vorrichtung gemäß zweitem Ausführungsbeispiel.

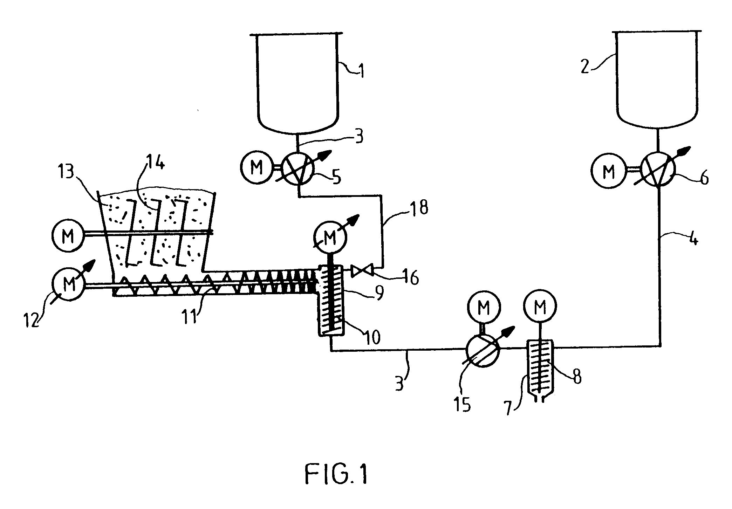

In Fig. 1 führen von Vorratsbehältern 1, 2 für Polyol und Isocyanat Zuleitungen 3, 4 über Dosierpumpen 5, 6 zu einem Mischkopf 7 mit Rührwerk 8. In der Zuleitung 3 ist ein Vormischer 9 mit Rührwerk 10 angeordnet. In den Vormischer 9 mündet eine Verdichtungsschnecke 11, welche einen drehmomenteinstellbaren bzw. -regelbaren Antrieb 12 aufweist. Dieser Verdichtungsschnecke 11 ist ein Aufgabetrichter 13 mit Auflockerungsrührer 14 vorgeordnet. Eine kurz vor dem Mischkopf 7 in der Zuleitung 3 angeordnete weitere Dosierpumpe ist mit 15 bezeichnet.

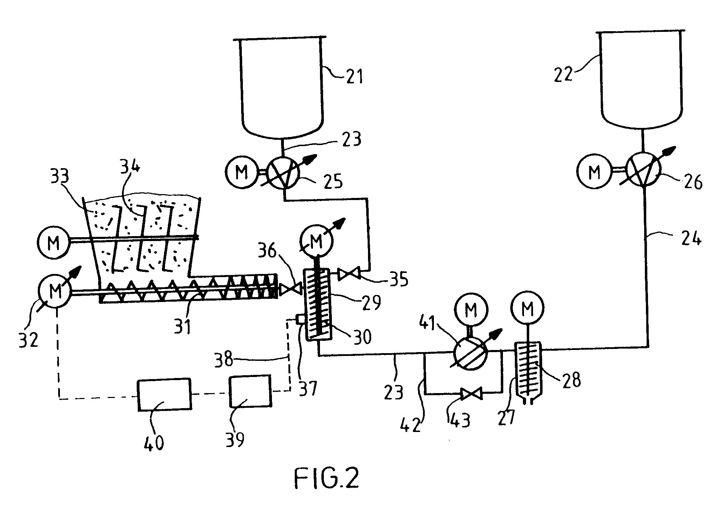

In Fig. 2 führen von Vorratsbehältern 21, 22 für Polyol und Isocyanat Zuleitungen 23, 24 über Dosierpumpen 25, 26 zu einem Mischkopf 27 mit Rührwerk 28. In der Zuleitung 23 ist ein Vormischer 29 mit Rührwerk 30 angeordnet. In den Vormischer 29 mündet eine Verdichtungsschnecke 31, welche einen drehzahlregelbaren Antrieb 32 aufweist. Dieser Verdichtungsschnecke 31 ist ein Aufgabetrichter 33 mit Auflockerungsrührer 34 vorgeordnet. Vor dem Vormischer 29 ist in der Zuleitung 23 ein Absperrventil 35 angeordnet. Zwischen der Verdichtungsschnecke 31 und dem Vormischer 29 ist ebenfalls ein Absperrventil 36 vorgesehen. Am Vormischer 29 ist ein Drucksensor 37 angeordnet, welcher mittels einer Signalleitung 38 über einen Sollwertvergleicher 39 und einen Drehzahlregler 40 mit dem Antrieb 32 verbunden ist. Eine kurz vor dem Mischkopf 27 in der Zuleitung 23 angeordnete weitere Dosierpumpe ist mit 41 bezeichnet. Sie ist mittels einer By-Pass-Leitung 42 umgehbar, in der ein Absperrventil 43 angeordnet ist.

Verfahrensbeispiel

Benutzt wird die Vorrichtung gemäß Fig. 2. Bei geschlossenem Absperrventil 36 und geöffneten Absperrventilen 35 und 43 werden mittels der Dosierpumpen 25, 26 von den Vorratsbehältern 21, 22 über die Zuleitungen 23, 24 18 kg/min Polyol bzw. 7 kg/min Isocyanat gefördert. Die Verdichtungsschnecke 31 rotiert mit 125 U/min, so daß der Zusatzstoff (Melaminpulver) verdichtet wird. Hat sich in der Verdichtungsschnecke 31 eine Verdichtung und im Vormischer ein Druck aufgebaut, werden das Absperrventil 36 geöffnet und das Absperrventil 43 geschlossen. Sodann dosiert die Verdichtungsschnecke 31 18 kg/min Melaminpulver in den Vormischer 29. Dieser wird mit Polyol beschickt. Das Rührwerk 30 rotiert mit 3000 U/min. Im Vormischer 29 herrscht ein Druck von 1 bar, welcher dem Solldruck entspricht. Die Dosierpumpe 41 dosiert 36 kg/min des im Vormischer 29 erzeugten Gemisches in den Mischkopf 27, dessen Rührwerk 28 mit 4000 U/min umläuft. Der Mischdruck im Mischkopf 27 beträgt 0,5 bar. Der fertige Schaumstoff zeigt eine außerordentlich homogene Verteilung des Melaminpulvers. Sinkt der Druck, wird die Drehzahl der Verdichtungsschnecke 29 durch die Regelung erhöht, wodurch der Verdichtungsgrad wieder auf den Sollwert ansteigt ebenso wie der Druck. Steigt der Druck an, wird die Drehzahl heruntergeregelt, so daß der Verdichtungsgrad auf den Sollwert sinkt ebenso wie der Druck.

## Patentansprüche

1. Verfahren zum Herstellen von Kunststoffen, insbesondere Schaumstoffen, aus mindestens zwei fließfähigen, dosiert zugeführten Reaktionskomponenten, wobei mindestens eine der Reaktionskomponenten mit pulvrigem bis feinkörnigem oder faserigem Zusatzstoff in vorgegebenem Verhältnis im Durchlauf unter Druck in einer Vormischzone (9, 29) vorvermischt und danach mit der anderen Reaktionskomponente zusammengeführt, im Durchlauf vermischt und das Gemisch ausreagieren gelassen wird, dadurch gekennzeichnet, daß der Zusatzstoff beim Zuführen verdichtet, der Druck in der Vormischzone (9, 29) konstant gehalten und das Gemisch aus Reaktionskomponente und Zusatzstoff der anderen Reaktionskomponente zum Vermischen dosiert zugefördert werden.

2. Verfahren nach Anspruch 1, dadurch gekennzeichnet, daß der Verdichtungsgrad des Zusatzstoffes einstellbar bzw. regelbar ist.

3. Verfahren nach Anspruch 1 oder 2, dadurch gekennzeichnet, daß als Regelgröße für den Verdichtungsgrad der Druck in der Vormischzone (9, 29) verwendet wird.

4. Vorrichtung zum Herstellen von Kunststoffen, insbesondere Schaumstoffen, aus mindestens zwei fließfähigen, dosiert zugeführten Reaktionskomponenten, bestehend aus Vorratsbehältern (1, 2) für Reaktionskomponenten, von denen Zuleitungen (3, 4) über Dosierpumpen (5, 6) zu einem Mischkopf (7) führen, und aus einer Speiseschnecke (11) zum Einbringen von pulvrigem bis feinkörnigem oder faserigem Zusatzstoff, welche in einen in mindestens einer der Zuleitungen (3, 4) zwischen Dosierpumpe (5) und Mischkopf (7) angeordneten Vormischer (9) mündet, dadurch gekennzeichnet, daß die Speiseschnecke (11) als Verdichtungsschnecke (11) ausgebildet ist; daß das Drehmoment ihres Antriebes (12) einstellbar bzw. regelbar ist und daß in der Zuleitung (3) zwischen Vormischer(9) und Mischkopf (7) eine weitere Dosierpumpe (15) angeordnet ist.

5. Vorrichtung zum Herstellen von Kunststoffen, insbesondere Schaumstoffen, aus mindestens zwei fließfähigen, dosiert zugeführten Reaktionskomponenten, bestehend aus Vorratsbehältern (21, 22) für Reaktionskomponenten, von denen Zuleitungen (23, 24) über Dosierpumpen (25, 26) zu einem Mischkopf (27) führen, und aus einer Speiseschnecke (31) zum Einbringen von pulvrigem bis feinkörnigem oder faserigem Zusatzstoff, welche in einen in mindestens einer der Zuleitungen (23, 24) zwischen Dosierpumpe (25) und Mischkopf (27) angeordneten Vormischer (29) mündet, dadurch gekennzeichnet, daß die Speiseschnecke (31) als Verdichtungsschnecke (31) ausgebildet ist; daß am Vormischer (29) ein Drucksensor (37) angeordnet ist, welcher mittels einer Signalleitung (38) über einen Sollwertvergleicher (39) und Drehzahlregler (40) mit dem Antrieb (32) der Verdichtungsschnecke (31) verbunden ist und daß in der Zuleitung (23) zwischen Vormischer (29) und Mischkopf (27) eine weitere Dosierpumpe (41) angeordnet ist.

6. Vorrichtung nach Anspruch 5, dadurch gekennzeichnet, daß zwischen Verdichtungsschnecke (31) und Vormischer (29) ein Absperrorgan (36) angeordnet ist.

7. Vorrichtung nach Anspruch 5 oder 6, dadurch gekennzeichnet, daß der weiteren Dosierpumpe (41) eine By-Pass-Leitung (42) mit Absperrorgan (43) zugeordnet ist.

## Claims

1. A process for the production of plastics, in particular foamed plastics, from at least two flowable reaction components supplied in dosed fashion, wherein at least one of the reaction components is premixed continuously with a powdery to fine-grained or fibrous additive in a predetermined ratio under pressure in a premixing zone (9, 29), whereupon it is combined with the other reaction component, is continuously mixed and the mixture is allowed to react, characterised in that the additive is compressed as it is supplied, the pressure in the premixing zone (9, 29) is maintained constant, and the mixture of reaction component and additive is supplied in dosed fashion to the other reaction component for mixing.

2. A process as claimed in Claim 1, characterised in that the degree of compression of the additive is adjustable and regulatable.

3. A process as claimed in Claim 1 or 2, characterised in that the pressure in the premixing zone (9, 29) is used as control variable for the degree of compression.

4. A device for the production of plastics, in particular foamed plastics, from at least two flowable reaction components which are supplied in dosed fashion, comprising supply containers (1, 2) for reaction components, from which supply lines (3, 4) lead via dosing pumps (5, 6) to a mixing head (7) and comprising a feeding worm conveyor (11) for the introduction of powdery to fine-grained or fibrous additive, which feeding worm conveyor (11) leads into a premixer (9) arranged in at least one of the supply lines (3, 4) between dosing pump (5) and mixing head (7), characterised in that the feeding worm conveyor (11) is designed as a compression worm conveyor (11); that the torque of its drive unit (12) is adjustable and regulatable and that a further dosing pump (15) is arranged in the supply line (3) between premixer (9) and mixing head (7).

5. A device for the production of plastics, in particular foamed plastics, from at least two flowable reaction components which are supplied in dosed fashion, comprising supply containers (21, 22) for reaction components, from which supply lines (23, 24) lead via dosing pumps (25, 26) to a mixing head (27), and comprising a feeding worm conveyor (31) for the introduction of powdery to fine-grained or fibrous additive, which feeding worm conveyor (31) leads into a premixer (29) arranged in at least one of the supply lines (23, 24) between dosing pump (25) and mixing head (27), characterised in that the feeding worm conveyor (31) is designed as a compression worm conveyor (31); that a pressure sensor (37) is arranged on the premixer (29), which pressure sensor (37) is connected by a signal line (38) via a theoretical value comparator (39) and rotation speed regulator (40) to the drive unit (32) of the compression worm conveyor (31) and that a further dosing pump (41) is arranged in the supply line (23) between premixer (29) and mixing head (27).

6. A device as claimed in Claim 5, characterised in that a shut-off element (36) is arranged between compression worm conveyor (31) and premixer (29).

7. A device as claimed in Claim 5 or 6, characterised in that a by-pass line (42) with shut-off element (43) is assigned to the further dosing pump (41).

## Revendications

1. Procédé de fabrication de résines synthétiques, en particulier de mousses de résines synthétiques, à partir d'au moins deux composants réactifs capables de s'écouler, amenés en quantités dosées, dans lequel au moins un des composants réactifs est mélangé au préalable dans une zone de mélange préalable (9, 29) en continu, sous pression, dans des proportions déterminées, avec un additif pulvérulent ou en grains fins ou fibreux puis combiné avec l'autre composant réactif, mélangé en continu, après quoi on laisse le mélange réagir complètement, caractérisé en ce que l'additif est comprimé à l'alimentation, la pression dans la zone de mélange préalable (9, 29) est maintenue constante et le mélange du composant réactif et de l'addifif est envoyé en quantité dosée à l'autre composant réactif pour mélange.

2. Procédé selon la revendication 1, caractérisé en ce que le taux de compression de l'additif est réglable.

3. Procédé selon la revendication 1 ou 2, caractérisé en ce que l'on utilise en tant que grandeur de réglage du taux de compression la pression dans la zone de mélange préalable (9, 29).

4. Appareillage pour la fabrication de résines synthétiques, en particulier de mousses de résines synthétiques, à partir d'au moins deux composants capables de s'écouler et amenés en quantités dosées, consistant en réservoirs (1, 2) pour les composants réactifs, d'où des conduits (3, 4) mènent, par l'intermédiaire de pompes doseuses (5, 6), à une tête de mélange (7), et une vis d'alimentation (11) pour l'introduction de l'additif pulvérulent, en grains fins ou fibreux, qui débouche dans un mélangeur préalable (9) disposé dans au moins un des conduits (3, 4) menant de la pompe doseuse (5) à la tête de mélange (7), caractérisé en ce que la vis d'alimentation (11) constitue une vis de compression (11) ; le moment de rotation de son moteur (12) est réglable, et une autre pompe doseuse (15) est disposée dans le conduit (3) menant du mélangeur préalable (9) à la tête de mélange (7).

5. Appareillage pour la fabrication de résines synthétiques, en particulier de mousses de résines synthétiques, à partir d'au moins deux composants réactifs capables de s'écouler, amenés en quantités dosées, consistant en réservoirs (21, 22) pour les composants réactifs, d'où des conduits (23, 24) mènent, par l'intermédiaire de pompes doseuses (25, 26), à une tête de mélange (27), et une vis d'alimentation (31) pour l'introduction d'un additif pulvérulent ou en grains fins ou fibreux, qui débouche dans un mélangeur préalable (29) disposé dans au moins un des conduits (23, 24) menant de la pompe doseuse (25) à la tête de mélange (27), caractérisé en ce que la vis d'alimentation (31) constitue une vis de compression (31) ; le mélangeur préalable (29) est équipé d'un dispositif sensible à la pression (37) qui, par l'intermédiaire d'un conduit de signalisation (38), d'un comparateur avec la valeur voulue (39) et d'un régulateur de la vitesse de rotation (40), est relié avec le moteur (32) de la vis de compression (31), et une autre pompe doseuse (41) est disposée dans le conduit (23) menant du mélangeur préalable (29) à la tête de mélange (27).

6. Appareillage selon la revendication 5, caractérisé en ce que, entre la vis de compression (31) et le mélangeur préalable (29), on a disposé un organe de fermeture (36).

7. Appareillage selon la revendication 5 ou 6, caractérisé en ce que l'autre pompe doseuse (41) est équipée d'un conduit de dérivation (42) avec organe de fermeture (43).

FIG.1

EP 0 373 409 B1

FIG.2